# EUROPÄISCHE PATENTSCHRIFT

(11) **EP 1 357 371 B1**
(45) Veröffentlichungstag und Bekanntmachung des Hinweises auf die Patenterteilung: **07.09.2005**
(21) Anmeldenummer: 03007711.9
(22) Anmeldetag: 04.04.2003
(51) Int. Cl.: G01L 5/10, B65B 13/22

(54) **( Manuelles ) Umreifen mit zugkraftgesteuertem Antrieb**
( Manual ) strapping with tension controlled drive
Cerclage ( manuel ) avec mouvement controlé par tension

(30) Priorität: 23.04.2002 DE 10218126
(43) Veröffentlichungstag der Anmeldung: 29.10.2003
(73) Patentinhaber: Maschinenfabrik Gerd Mosca AG, 69429 Waldbrunn (DE)
(72) Erfinder: Lüdtke, Peter, 74722 Buchen-Götzingen (DE)
(74) Vertreter: Freischem, Stephan

(56) Entgegenhaltungen:
- EP-A- 1 059 234
- DE-A- 3 249 559
- DE-A- 19 523 274

## Beschreibung

Die Erfindung betrifft eine Umreifungsmaschine sowie em entsprechendes Verfahren.

Eine Umreifungsmaschine umfaßt einen Auflagetisch für ein zu umreifendes Packgut. Der Auflagetisch wird in der Regel durch eine aus Metallblech bestehende Platte gebildet, die einen Schlitz aufweist und die Oberfläche der Maschine bildet. Die Umreifungsmaschine umfaßt ferner einen Bandvorrat, von dem ein flexibles Umreifungsband abgezogen werden kann, das meist aus Kunststoff besteht. Das Umreifungsband wird in Form einer Schlaufe um das Packgut geführt. Sein freies Ende wird in den Schlitz in dem Auflagetisch eingeführt, wo es durch ein Verschlußaggregat zu einem Anschlag geführt wird. Das Verschlußaggregat befindet sich unterhalb des Schlitzes in dem Auflagetisch. In dem Verschlußaggregat werden das freie Ende und der Anfangsbereich der das Packgut umgebenden Schlaufe übereinandergelegt und miteinander verbunden. Eine Spannvorrichtung der Umreifungsmaschine spannt das Band vor dem Verbinden. Eine Trennvorrichtung trennt das mit dem Bandvorrat verbundene Ende der Schlaufe von dem Bandvorrat ab. Zum Verbinden werden die beiden freien Enden der Schlaufe meist durch das Verschlußaggregat verschweißt.

Eine industrielle Umreifungsmaschine ist beispielsweise in der Druckschrift DE 195 16 043 beschrieben, wobei die Funktion eines Verschlußaggregats genauer aus der DE 100 24 049 der Anmelderin hervorgeht. In beiden Fällen wird das Band durch einen Bandführungsrahmen um das Packgut herumgeführt. Kleinere manuelle Umreifungsmaschinen weisen keinen Bandführungsrahmen auf. Bei ihnen wird das Umreifungsband durch den Benutzer von Hand ergriffen und um das Packgut geführt, um eine Schlaufe zu bilden. Aus der Druckschrift DE 32 49 559 C2 ist die Verwendung von Spannungssensoren bekannt, die bei Erreichen einer bestimmten Grenzspannung einen Spannantrieb für das Umreifungsband ausschalten. Aus der Druckschrift DE 198 36 644 Al ist ein Spannungsmeßsensor bekannt, der ein Antriebsmittel zur Einstellung einer konstanten Bandspannung steuert. Hier handelt es sich allerdings nicht um eine Umreifungsmaschine sondern um eine Etikettiervorrichtung.

Die vorliegende Erfindung bezieht sich insbesondere auf manuell betriebene Umreifungsmaschinen.

Bei manuellen Umreifungsmaschinen, bei denen die Bandschlaufe manuell um das Packgut herumgeführt wird, existieren zwei Möglichkeiten für die Entnahme des Bandes aus dem Bandvorrat. Zum einen kann ein Betätigungsschalter ein Antriebsmittel zur Bandausgabe aktivieren, zum anderen kann ein Benutzer durch kräftiges Ziehen Band vom Bandvorrat abwickeln. Das Antriebsmittel bewirkt einen Bandtransport, bis der Betätigungsschalter wieder losgelassen wird. Anschließend führt der Benutzer die ausgegebene Schlaufe um das Paket. Wenn die ausgegebene Bandlänge zu kurz ist, drückt der Benutzer erneut den Betätigungsschalter oder zieht kräftig an dem Band, so daß ein weiterer Abschnitt des Umreifungsbandes von dem Bandvorrat abgewickelt wird. Das Betätigen des Betätigungsschalters ist etwas zeitaufwendig, da der Benutzer die bereits gebildete Schlaufe loslassen muß, um den Betätigungsschalter zu drücken. Das Herausziehen des Bandes mit den Händen kann zu Verletzungen führen, da ein Kunststoff-Umreifungsband oft scharfkantig ist und beim Aufbringen einer großen Zugkraft in die Haut des Benutzers schneiden kann.

Aufgabe der vorliegenden Erfindung ist es daher, die Bedienbarkeit einer Umreifungsmaschine und das Verfahren zum manuellen Umreifen eines Packgutes zu verbessern.

Diese Aufgabe wird in bezug auf die Umreifungsinaschine durch die Gesamtheit der Merkmale des Patentanspruchs 1 gelöst.

Auf übliche Weise wird bei der vorliegenden Umreifungsmaschine das Umreifungsband durch einen Bandantrieb aus dem Bandvorrat abgezogen und in die Umreifungszone transportiert. Der Bandantrieb umfaßt in der Regel eine Reibrolle, um welche das Umreifungsband geschlungen ist und die eine Zugspannung auf den zum Bandvorrat führenden Bandabschnitt ausübt. Durch den Bandantrieb wird das Umreifungsband von dem Bandvorrat abgezogen und in die Umreifungszone transportiert. Durch Invertieren des Antriebsmittels oder durch einen zusätzlichen Spannantrieb kann die Zugkraft umgekehrt werden, so daß sie auf den im Umreifungsbereich befindlichen Bandabschnitt wirkt. In diesem Fall wirkt das Antriebsmittel als Spannantrieb, welches ein Spannen der Schlaufe um das zu umreifende Packgut bewirkt. Nach dem Spannen der Schlaufe werden die Schlaufenenden verschweißt und von dem Bandvorrat abgetrennt.

Gemäß der Erfindung ist das Antriebsmittel mit einem Signalmittel gekoppelt , welches bei einer auf das Umreifungsband wirkenden Zugspannung ein Signal abgibt, und das Antriebsmittel bewirkt bei einem Signal des Signalmittels einen Bandtransport in die Umreifungszone.

Vorzugsweise nahe dem Antriebsmittel für den Bandabzug von dem Bandvorrat ist ein Umlenkmittel, welches das Umreifungsband entlang einer gekrümmten Bahn führt, beweglich an einem Tragelement befestigt. Das Tragelement ist dabei in der Regel der Träger des Antriebsmittels der Umreifungsmaschine. Eine auf das Bandelement aufgebrachte Zugkraft streckt das Band und bewirkt, daß der bogenförmige Bandverlauf im Bereich des Umlenkmittels begradigt wird. Hierdurch wird das Umlenkmittel aus seiner Ruhelage in eine Signalposition bewegt, in der durch ein Signalmittel ein Signal erzeugt wird. Durch das Signal kann das Antriebsmittel für den Bandabzug derart aktiviert werden, daß eine vorbestimmte Länge des Umreifungsbandes abgezogen und in die Umreifungszone ausgegeben wird. Zur Erzeugung des Signals mittels des Umlenkmittels durch Ziehen an dem Umreifungsband sind nur sehr kleine Zugkräfte notwendig. Der Benutzer kann also durch sehr geringe Zugkraft ohne separate Betätigung eines Betätigungsschalters eine automatische Ausgabe einer vorbestimmten Länge des Umreifungsbandes bewirken.

Alternativ kann der Bandantrieb durch das Signal solange aktiviert werden, bis der Benutzer erneut an dem Band zieht und ein zweites Signal erzeugt. Beide Alternativen können kombiniert werden, so daß das Band um eine vorbestimmte Länge ausgegeben wird, wenn der Benutzer den Bandtransport nicht vorher durch erneutes Ziehen an dem Umreifungsband stoppt.

Vorzugsweise bewirkt das Umlenkmittel einen Druck gegen das Signalmittel, welches meist von einem elektrischen Schalter gebildet wird. Das Umlenkmittel bewirkt einen Druck auf den Taster des elektrischen Schalters, der hierdurch seinen Schaltzustand ändert. Alternativ kann durch die Verlagerung des Umlenkmittels in die Signalposition ein elektrischer Kontakt unterbrochen werden und dadurch ein Signal erzeugt werden.

Dabei kann das Umlenkmittel eine Rolle sein, beispielsweise eine Führungsrolle oder eine Antriebsrolle, welche von dem Umreifungsband über einen bestimmten Winkelbereich, z.B. 90°, umwickelt ist. Die Achse dieser Rolle kann beweglich gelagert sein, wobei eine Spannfeder die Achse in einer Ruheposition hält. Die Achse ist in diesem Fall mit dem Signalmittel gekoppelt, wobei die Achse aufgrund einer erhöhten Bandspannung aus der Ruhelage in eine Signalposition verlagert wird, in der das Signalmittel das Signal abgibt.

Bei einer einfachen Ausführungsform besteht das Umlenkmittel aus einem bogenförmigen Oberflächenabschnitt, entlang dem das flexible Umreifungsband geführt ist. Diese Ausführungsform kann ebenfalls ein komplementäres bogenförmiges Widerlager umfassen, in welchem der bogenförmige Oberflächenabschnitt des Umlenkmittels in der Ruhelage aufgenommen ist. Bei einer Zugkraft, die auf das Umreifungsband wirkt, wird durch Strecken des Umreifungsbandes im Bereich seiner bogenförmigen Umlenkung der bogenförmige Oberflächenabschnitt aus seiner Ruhelage herausbewegt und kann einen Schalter betätigen.

Bei einer praktischen Ausführungsform ist das Umlenkmittel um eine Schwenkachse schwenkbar an dem Tragelement befestigt. Der bogenförmige Oberflächenabschnitt kann an einem Schwenkhebel, der das Umlenkmittel bildet, in einem Abstand von der Schwenkachse angeordnet sein. Der Schwenkhebel kann mit einem Betätigungshebel starr verbunden sein, dessen Ende gegen einen Taster des elektrischen Schalters drückt. Durch das Hebelgetriebe, bestehend aus Schwenkhebel und Betätigungshebel, kann die Bewegung des Umlenkmittels auf den genannten elektrischen Schalter übertragen werden, wobei sich das Umlenkmittel auf der einen Seite des Bandantriebes und der Schalter auf der anderen Seite des Bandantriebes befindet.

Die Umreifungsmaschine kann - wie erwähnt - einen Bandvorrat und eine Umreifungszone aufweisen, wobei das Umlenkmittel der beschriebenen Spannungsmeßvorrichtung zwischen dem Bandvorrat und der Umreifungszone angeordnet ist. Eine praktische Ausführungsform der Umreifungsmaschine umfaßt ein Antriebsmittel, welches das Umreifungsband von dem Bandvorrat in die Umreifungszone transportiert. Das Signalmittel wird in dieser Ausführungsform von einem elektrischen Schalter gebildet. Das Antriebsmittel ist mit dem elektrischen Schalter gekoppelt und bewirkt bei einem Signal des elektrischen Schalters, welches eine Zugspannung auf das Umreifungsband signalisiert, einen Bandtransport um eine vorbestimmte Länge. Auf diese Weise kann durch einfache manuelle Zugkraft auf das Umreifungsband ein Bandtransport bewirkt werden, ohne daß ein externer Betätigungsschalter manuell betätigt werden muß oder eine große Zugkraft auf das Band ausgeübt werden muß. Schon eine sehr kleine Zugkraft reicht aus, um einen Bandtransport um eine vorbestimmte Länge zu bewirken. Ist die vorbestimmte Länge nicht ausreichend, kann durch erneutes leichtes Ziehen an dem Umreifungsband ein weiterer Transport um die vorbestimmte Länge bewirkt werden. Die Gefahr einer Verletzung des Benutzers dadurch, daß sich das Umreifungsband in seine Hand einschneidet, ist beseitigt.

Bei einer praktischen Ausführungsform weist die Umreifungsmaschine einen Spannantrieb zum Spannen der das Packgut umgebenden Schlaufe sowie ein Verschlußmittel zum Verbinden der Schlaufenenden auf. Der Spannantrieb kann entweder durch Invertieren des Antriebsmittels bewirkt werden, so daß das Umreifungsband nicht von dem Bandvorrat abgezogen, sondern in Richtung des Bandvorrates transportiert wird. Es ist auch ein zusätzlicher Antrieb, bestehend aus einer Reibrolle und erforderlichenfalls einer Druckrolle, welche das Band gegen die Reibrolle drückt, möglich.

Bei einer praktischen Ausführungsform ist das Signal des elektrischen Schalters mit dem Spannantrieb derart gekoppelt, daß beim Auftreten eines Signals, welches eine Zugspannung des Umreifungsbandes signalisiert, der Spannantrieb abgeschaltet wird. Eine derartige Abschaltung des Spannantriebs erfolgte bisher in der Regel durch Überwachung der elektrischen Spannung am Motor des Spannantriebs. Dabei entsprach die kleinste Zugkraft, die zu einer Abschaltung des Spannantriebs führte, dem Losbrechmoment des Antriebsmotors. Diese kleinste Zugkraft konnte somit einen beachtlichen Wert annehmen. Durch Verwendung der erfindungsgemäßen Meßvorrichtung für die Abschaltung des Spannantriebes kann bei sehr kleinen Zugspannungen auf das die Schlaufe bildende Umreifungsband bereits eine Abschaltung des Spannantriebs bewirkt werden. Hierdurch wird vermieden, daß das umreifte Packgut aufgrund zu großer Zugspannung des Umreifungsbandes beschädigt wird.

In einer praktischen Ausführungsform umfaßt die Umreifungsmaschine ein Erfassungsmittel, welches erfaßt, ob der Spannantrieb aktiviert ist oder nicht. Das Erfassungsmittel kann beispielsweise den Stromfluß in einem Antriebsmotor des Spannantriebs erfassen. Das Erfassungsmittel leitet ein entsprechendes Zustandssignal an eine Steuereinheit weiter. Bei aktiviertem Spannantrieb bewirkt das Signal des elektrischen Schalters die Abschaltung des Spannantriebs. Bei deaktiviertem Spannantrieb bewirkt das Signal des elektrischen Schalters, welches eine Zugspannung auf das Umreifungsband signalisiert, den Bandtransport um eine vorbestimmte Länge. So kann mit dem gleichen Mittel zur Ermittlung der Bandspannung während der Bildung der Schlaufe der Bandtransport bei einem Bandbedarf aktiviert werden und während der Spannung der Schlaufe das Abschalten des Spannantriebs zur Vermeidung der Beschädigung des Packgutes durchgeführt werden.

Nach dem Abschalten des Spannantriebs kann das Verschlußmittel betätigt werden. Im wesentlichen synchron mit der Betätigung des Verschlußmittels, d.h. kurz vor oder kurz nach der Betätigung des Verschlußmittels, kann eine Trennvorrichtung betätigt werden, welche das Umreifungsband vom Bandvorrat trennt.

Schließlich ist die Erfindung auf ein vorteilhaftes Verfahren zum manuellen Umreifen von Packgut mit einem Umreifungsband gerichtet Anspruch 14.

Ein Ausführungsbeispiel der Erfindung wird nachfolgend unter Bezugnahme auf die beigefügten Zeichnungen beschrieben. Die Zeichnungen zeigen in:
- Fig. 1: eine Seitenansicht einer erfindungsgemäßen manuellen Umreifungsmaschine,
- Fig. 2: die Rückansicht der Umreifungsmaschine aus Fig. 1,
- Fig. 3: die Draufsicht auf die Umreifungsmaschine aus Fig. 1,
- Fig. 4: eine vergrößerte Seitenansicht der Umreifungsmaschine aus Fig. 1 ohne seitliche Gehäusewand mit Bandantrieb und der erfindungsgemäßen Band-Spannungsmeßvorrichtung.

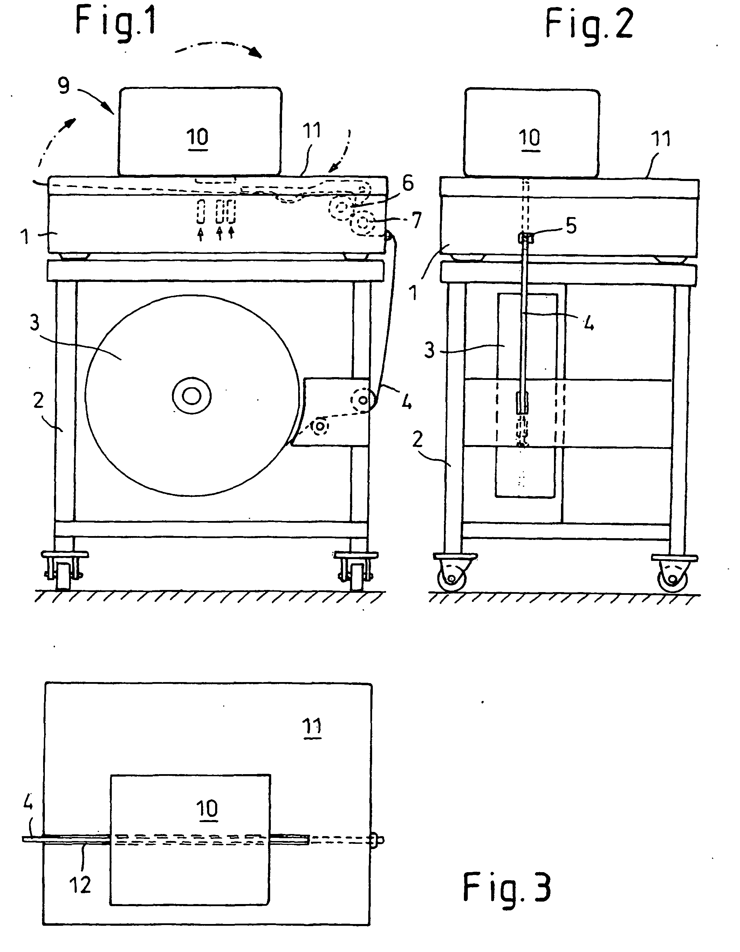

In den Fig. 1 - 3 der Zeichnungen ist eine halbautomatische Kunststoffband-Umreifungsmaschine dargestellt. Sie wird von der Anmelderin entweder unter der Produktbezeichnung MO-M-5 mit dem in den Zeichnungen dargestellten Rollwagen mit Aufnahme für die Bandspule vertrieben. Alternativ ohne Rollwagen als Tischgerät wird diese Umreifungsmaschine von der Anmelderin unter der Produktbezeichnung MO-M-5-T vertrieben.

In den Zeichnungsfiguren 1 und 2 ist zu erkennen, daß eine Umreifungsmaschine 1 auf einem Rollwagen 2 aufgesetzt ist. Die Umreifungsmaschine 1 ist dazu vorgesehen, ein Packstück 10 mit einem länglichen flexiblen Element, nämlich einem Umreifungsband 4 aus Kunststoff, zu umwickeln. An dem Rollwagen 2 ist eine Bandspule 3 drehbar befestigt. Die Bandspule 3 bildet den Bandvorrat für die Umreifungsmaschine 1. Das Umreifungsband 4, welches von der Bandspule 3 abgezogen wird, wird in eine Eintrittsöffnung 5 an der Umreifungsmaschine eingesteckt. Von der Eintrittsöffnung 5 wird das Umreifungsband 4 zu einem Antriebsmittel weitergeleitet.

Das Antriebsmittel besteht aus einer Antriebsrolle 6 und einer Andrückrolle 7, die in entgegengesetzte Drehrichtungen angetrieben sind, so daß ihre Umfangsflächen, die von beiden Seiten gegen das Umreifungsband 4 anliegen, synchron in die gleiche Richtung mit gleicher Geschwindigkeit bewegt werden. Die Umfangsfläche der Antriebsrolle 6 wird von einer gummielastischen Schicht gebildet und weist einen hohen Reibkoeffizienten auf. Die Umfangsfläche der Andrückrolle 7 besteht aus Metall. Die Andrückrolle 7 ist beweglich an dem Tragelement 8 für den Bandantrieb gehalten und wird mit einer vorbestimmten Druckkraft gegen die Antriebsrolle 6 gedrückt. Vorzugsweise sind sowohl die Antriebsrolle 6 als auch die Andrückrolle 7 mit auf ihren Achsen angeordneten Zahnrädern versehen, welche miteinander kämmen und auf diese Weise den Drehantrieb mit entgegengerichtetem Drehsinn der beiden Rollen 6,7 bewirken. Die Welle der Antriebsrolle 6 ist ferner mit einem Elektromotor (nicht dargestellt) gekoppelt.

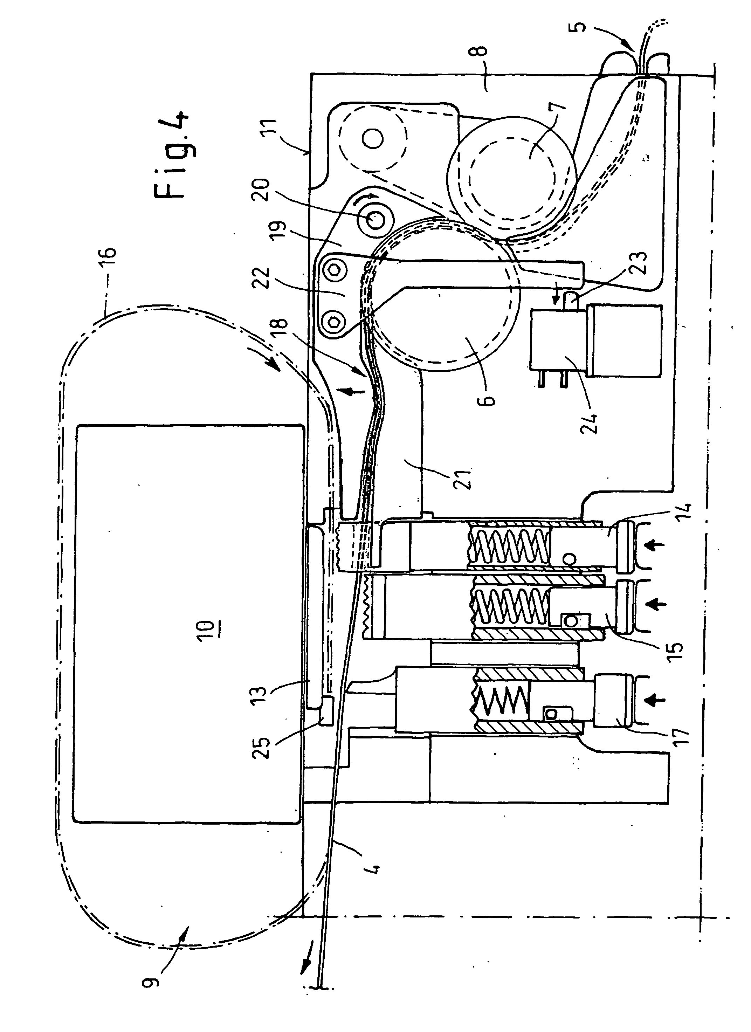

Der Elektromotor kann in beide Drehrichtungen angetrieben werden. In der einen Drehrichtung bewirkt er einen Vorschub des Umreifungsbandes 4 von der Eintrittsöffnung 5 der Umreifungsmaschine 1 in Richtung einer Umreifungszone 9, in der das zu umreifende Packgut 10 angebracht wird. Der Bandantrieb mit seinen beiden Rollen 6,7 befindet sich unterhalb eines Auflagetisches 11 hinter der in Fig. 1 sichtbaren seitlichen Gehäusewand der Umreifungsmaschine 1. In dem Auflagetisch 11 ist ein Schlitz 12 vorgesehen, durch den das Umreifungsband 4 von dem Bereich unterhalb des Auflagetisches 11 in die Umreifungszone 9 oberhalb des Auflagetisches 11 hindurchtreten kann (vgl. Fig. 4).

Links neben dem Bandantrieb ist ein Verschlußaggregat angeordnet, welches in Fig. 1 schematisch und im Detail in Fig. 4 dargestellt ist. Das Verschlußaggregat besteht aus drei metallischen Andrückelementen oder Stempeln, welche durch nicht dargestellte Antriebsnocken oder Steuerscheiben gegen eine Widerlagerplatte 13 bewegt werden. Die Widerlagerplatte 13 kann zum Verschließen des Schlitzes 12 im Auflagetisch 11 in Richtung quer zum Schlitz 12 verschoben werden. Das am nächsten zum Antriebsmittel liegende Andrückelement ist ein Haltestempel 14 zum Einklemmen des freien Endes des Umreifungsbandes 4. Der Haltestempel 14 wird gegen die Widerlagerplatte 13 gedrückt, wenn das freie Bandende gegen einen Anschlag 25 anliegt. Das von dem Antriebsmittel abgewandte, in Fig. 4 links erkennbare Andrückelement ist ein Klemmstempel 17. Der Klemmstempel 17 wird nach dem Spannen des die Schlaufe 16 bildenden Bandes gegen die Widerlagerplatte 13 gedrückt und fixiert das mit dem Bandvorrat verbundene Bandende. Das mittlere Andrückelement ist ein Schweißstempel 15, der durch einen Schwingantrieb in Vibration versetzt wird. Der Schweißstempel 15 wird nach dem Haltestempel 14 und nach dem Klemmstempel 17 gegen die Widerlagerplatte 13 gedrückt und trennt dabei die durch das Umreifungsband gebildete Schlaufe 16 von dem Bandvorrat. Anschließend bewirkt der Schwingantrieb das Verschweißen der Enden der Schlaufe 16.

Nach dem Verschweißen der beiden Enden der Schlaufe 16 werden alle Stempel 14,15,17 von der Widerlagerplatte 13 weg nach unten bewegt. Die Widerlagerplatte 13 wird seitlich aus dem Schlitz 12 heraus bewegt. Das umreifte Packgut 10 kann von dem Auflagetisch 11 entnommen werden.

Die Funktion des durch die Stempel 14,15 und 17 gebildeten Verschlußaggregats ist aus dem Stand der Technik, beispielsweise der eingangs genannten DE 100 24 049 der Anmelderin, hinlänglich bekannt.

Die erfindungsgemäße Meßvorrichtung für die Bandspannung ist insbesondere in Fig. 4 zu erkennen. Sie besteht aus einem Umlenkmittel, welches durch einen Schwenkhebel 19 gebildet wird, dessen untere Oberfläche gegen das Umreifungsband 4 anliegt. Ein Abschnitt 18 der unteren Oberfläche ist bogenförmig ausgebildet und in einer komplementären bogenförmigen Aufnahme 21 aufgenommen, welche an dem Tragelement 8 für den Bandantrieb befestigt ist. Der Schwenkhebel 19 mit dem bogenförmigen Oberflächenabschnitt 18 ist um eine Schwenkachse 20 schwenkbar an dem Tragelement 8 angelenkt. An dem Schwenkhebel 19 ist ein Betätigungshebel 22 starr befestigt, nämlich festgeschraubt. Das freie, in Fig. 4 unten liegende Ende des Betätigungshebels 22 drückt gegen einen Taster 23 eines elektrischen Schalters 24.

Wird auf das Umreifungsband 4 eine Zugspannung aufgebracht, reckt sich der Abschnitt des Umreifungsbandes unterhalb des bogenförmigen Oberflächenabschnitts 18 des Schwenkhebels 19. Dadurch verschwenkt der Schwenkhebel 19 um die Schwenkachse 20. Dabei wird das untere Ende 22 des Betätigungshebels auf den Taster 23 zu bewegt. Der Taster 23 wird in den Schalter 24 eingedrückt und ändert den Schaltzustand des elektrischen Schalters 24. Die beiden Klemmen des elektrischen Schalters 24 sind mit einer Antriebssteuerung (nicht dargestellt) verbunden, welche den Antriebsmotor für den Bandantrieb - bestehend aus der Antriebsrolle 6 und der Andrückrolle 7 - steuert.

Während des manuellen Umreifens des Packguts 10 bewirkt eine Betätigung des elektrischen Schalters 24 durch Ziehen am Band 4, daß der Bandantrieb das Umreifungsband 4 von dem Bandvorrat 3 abzieht und in die Umreifungszone 9 transportiert. Dabei ist die Antriebssteuerung derart eingestellt, daß der Bandantrieb das Abziehen um eine vorbestimmte Länge, beispielsweise 50 cm, bewirkt.

Die Antriebssteuerung invertiert den Bandantrieb, wenn das Umreifungsband 4 zur Bildung einer Schlaufe in den Schlitz 12 in dem Auflagetisch 11 eingeschoben ist und gegen einen Anschlag 25 am Ende der Widerlagerplatte 13 (siehe Fig. 4) anliegt. Hierdurch wird die Schlaufe 16 gespannt. Zuvor wird der Haltestempel 14 gegen die Widerlagerplatte 13 gedrückt und fixiert das freie Ende der Schlaufe 16. Der invertierte Antrieb zieht die Schlaufe 16 fest um das Packgut 10. Wenn die Schlaufe 16 eng um das Packgut 10 anliegt, bewirkt die durch den Bandantrieb erzeugte Spannung des Umreifungsbandes 4 ein Hochschwenken des Schwenkhebels 19. Durch den Betätigungshebel 22 wird der Taster 23 betätigt, so daß der elektrische Schalter 24 ein Signal an den Bandantrieb abgibt. Aufgrund dieses Signals wird der Bandantrieb, der die Schlaufe 16 spannt, gestoppt. Die Widerstandskraft des Schwenkhebels 19 gegen Verlagerung aus der Ruhestellung kann sehr gering eingestellt werden, so daß schon bei kleinen Spannkräften die Signalabgabe durch den elektrischen Schalter 24 erfolgt. Dadurch wird vermieden, daß zu große Zugkräfte, die auf das Umreifungsband 4 wirken, das Packgut 10 beschädigen.

Ein Spannungsmeßgerät oder Strommeßgerät (nicht dargestellt) kann an dem Antriebsmotor für die Antriebsrolle 6 angebracht werden, so daß ermittelt werden kann, ob die Antriebsrolle 6 während des Auftretens des Signals des Schalters 24 zum Spannen des Umreifungsbandes 4 angetrieben ist. In diesem Fall wird der Spannantrieb bei Auftreten des Signals deaktiviert.

Die Sensoren können so eingestellt werden, daß grundsätzlich zwischen aktivem Antrieb (unabhängig von der Drehrichtung) und nicht aktivem Antrieb unterschieden wird. Bei nicht aktivem Antrieb kann eine Zugkraft auf das Band nur durch den Benutzer aufgebracht werden. In diesem Fall wird die Antriebssteuerung dazu veranlaßt, die Ausgabe des Umreifungsbandes 4 in die Umreifungszone 9 um eine bestimmte Länge durchzuführen. Während der Ausgabe des Umreifungsbandes 4 in die Umreifungszone 9 kann ein erneutes Ziehen durch den Benutzer signalisieren, daß die Bandausgabe durch Deaktivieren des Bandantriebs zu beenden ist. Während des Spannens der Schlaufe 16 kann - wie gesagt - die Deaktivierung des Bandantriebs durch den Schalter 24 bewirkt werden, dessen Signal die gewünschte Bandspannung der Schlaufe 16 wiedergibt.

Wird ein schwereres Metall zur Bildung des Schwenkhebels 19 verwandt, reicht dessen Eigengewicht aus, um in Abwesenheit einer Bandspannung den bogenförmigen Oberflächenabschnitt des Schwenkhebels 19 in die in Fig. 4 dargestellte Ruhelage zu bewegen. Alternativ kann ein zusätzliches Spannmittel wie beispielsweise eine Spannfeder vorgesehen werden, die den Schwenkhebel 19 in seiner in Fig. 4 dargestellte Ruhelage hält.

## Patentansprüche

1. Umreifungsmaschine (1) zur Umreifung von Packgut (10) mit einem Umreifungsband (4), welche ein Antriebsmittel (6,7) umfaßt, um das Umreifungsband (4) von einem Bandvorrat (3) in eine Umreifungszone (9) zu transportieren, **dadurch gekennzeichnet, daß** das Antriebsmittel (6,7) mit einem Signalmittel (24) gekoppelt ist, welches bei einer auf das Umreifungsband (4) wirkenden Zugspannung ein Signal abgibt, und daß das Antriebsmittel (6,7) bei einem Signal des Signalmittels (24) einen Bandtransport in die Umreifungszone (9) bewirkt.

2. Umreifungsmaschine (1) nach Anspruch 1, **gekennzeichnet durch** ein bewegliches Umlenkmittel (19), welches das Umreifungsband (4) entlang einer gekrümmten Bahn führt und welches **durch** eine auf das Umreifungsband (4) wirkende Zugspannung aus einer Ruhelage in eine Signalposition bewegbar ist, wobei das Umlenkmittel (19) mit dem Signalmittel (24) gekoppelt ist, um in der Signalposition des Umlenkmittels (19) ein Signal zu erzeugen.

3. Umreifungsmaschine (1) nach Anspruch 1 oder 2, **dadurch gekennzeichnet, daß** das Signalmittel ein elektrischer Schalter (24) ist.

4. Umreifungsmaschine (1) nach einem der vorangehenden Ansprüche, **dadurch gekennzeichnet, daß** das Umlenkmittel (19) einen bogenförmigen Oberflächenabschnitt (18) aufweist, entlang dem das Umreifungsband (4) geführt ist.

5. Umreifungsmaschine (1) nach einem der vorangehenden Ansprüche, **dadurch gekennzeichnet, daß** das Umlenkmittel ein Schwenkhebel (19) ist, der um eine Schwenkachse (20) schwenkbar an dem Tragelement (8) befestigt ist.

6. Umreifungsmaschine (1) nach den Ansprüchen 4 und 5, **dadurch gekennzeichnet, daß** der bogenförmige Oberflächenabschnitt (18) an dem Schwenkhebel (19) in einem Abstand von der Schwenkachse (20) angeordnet ist.

7. Umreifungsmaschine (1) nach den Ansprüchen 5 und 6, **dadurch gekennzeichnet, daß** der Schwenkhebel (19) mit einem Betätigungshebel (22) starr verbunden ist, dessen Ende gegen einen Taster (23) des elektrischen Schalters (24) wirkt.

8. Umreifungsmaschine (1) nach einem der vorangehenden Ansprüche, **dadurch gekennzeichnet, daß** das Umlenkmittel (19) zwischen dem Bandvorrat (3) und der Umreifungszone (9) angeordnet ist.

9. Umreifungsmaschine (1) nach einem der vorangehenden Ansprüche, **dadurch gekennzeichnet, daß** sie einen Spannantrieb zum Spannen einer das Packgut (10) umgebenen Schlaufe (16) und ein Verschlußmittel (13,15) zum Verbinden der übereinanderliegenden Enden dieser Schlaufe (16) aufweist.

10. Umreifungsmaschine (1) nach Anspruch 9, **dadurch gekennzeichnet, daß** das Umlenkmittel (19) zwischen dem Spannantrieb und der Umreifungszone (9) angeordnet ist und daß das Umlenkmittel (19) mit dem Signalmittel (24) gekoppelt ist und bei einem Signal des Signalmittels (24) der Spannantrieb abgeschaltet wird.

11. Umreifungsmaschine (1) nach Anspruch 10, **dadurch gekennzeichnet, daß** sie ein Erfassungsmittel aufweist, welches erfaßt, ob der Spannantrieb aktiviert ist und ein entsprechendes Zustandssignal an eine Steuerungseinheit übermittelt, wobei bei aktiviertem Spannantrieb bei einem Signal des Signalmittels (24) der Spannantrieb abgeschaltet und bei deaktiviertem Spannantrieb bei einem Signal des Signalmittels (24) ein Bandtransport bewirkt wird.

12. Umreifungsmaschine (1) nach Anspruch 10 oder 11, **dadurch gekennzeichnet, daß** das Verschlußmittel (13, 15) durch die Steuervorrichtung nach dem Abschalten des Spannantriebs betätigt wird.

13. Umreifungsmaschine (1) nach Anspruch 12, **dadurch gekennzeichnet, daß** sie eine Trennvorrichtung (14,15) umfaßt, welche durch die Steuervorrichtung im wesentlichen synchron mit dem Verschlußmittel (13,15) betätigt wird.

14. Verfahren zum manuellen Umreifen von Packgut (10) mit einem Umreifungsband (4), **dadurch gekennzeichnet, daß** durch eine auf das Umreifungsband (4) wirkende Zugkraft ein Signal erzeugt wird, welches an eine Antriebssteuerung für ein Antriebsmittel (6,7) weitergeleitet wird, wobei die Antriebssteuerung das Antriebsmittel (6,7) beim Auftreten des Signals aktiviert, um einen Bandtransport in eine Umreifungszone (9) zu bewirken.

15. Verfahren nach Anspruch 14, **dadurch gekennzeichnet, daß** das Antriebsmittel zur Ausgabe einer vorbestimmten Länge des Umreifungsbandes (4) aktiviert wird.

16. Verfahren nach Anspruch 14 oder 15, **dadurch gekennzeichnet, daß** durch ein Erfassungsmittel erfaßt wird, ob das Antriebsmittel aktiviert ist und beim Auftreten des Signals bei aktivem Antriebsmittel (6,7) die Antriebssteuerung das Antriebsmittel (6,7) deaktiviert.

17. Verfahren nach einem der Ansprüche 14 bis 16, **dadurch gekennzeichnet, daß** das Umreifungsband (4) durch einen Spannantrieb gespannt wird und daß beim Auftreten eines Signals des Signalmittels (24) der Spannantrieb abgeschaltet wird.

18. Verfahren nach einem der Ansprüche 14 bis 16, **dadurch gekennzeichnet, daß** durch ein Erfassungsmittel erfaßt wird, ob der Spannantrieb aktiviert ist, und daß bei aktiviertem Spannantrieb beim Auftreten eines Signals des Signalmittels (24) der Spannantrieb abgeschaltet und bei deaktiviertem Spannantrieb beim Auftreten eines Signals des Signalmittels (24) ein Bandtransport bewirkt wird.

## Claims

1. A strapping machine (1) for strapping packages (10) with a strap (4), comprising a drive means (6, 7) for conveying the strap (4) from a strap supply (3) into a strapping zone (9), **characterised in that** the drive means (6, 7) is coupled to a signalling means (24), which outputs a signal when tensile stress acts on the strap (4), and **in that** the drive means (6, 7) conveys the strap into the strapping zone (9) on a signal from the signalling means (24).

2. A strapping machine (1) according to claim 1, **characterised by** a movable deflection means (19), which guides the strap (4) along a curved path and which is movable by tensile stress acting on the strap (4) from a rest position into a signal position, wherein the deflection means (19) is coupled to the signalling means (24), in order to generate a signal when the deflection means (19) is in the signal position.

3. A strapping machine (1) according to claim 1 or claim 2, **characterised in that** the signalling means is an electrical switch (24).

4. A strapping machine (1) according to any one of the preceding claims, **characterised in that** the deflection means (19) comprises a curved surface portion (18), along which the strap (4) is guided.

5. A strapping machine (1) according to any one of the preceding claims, **characterised in that** the deflection means is a swivel lever (19), which is attached to the supporting element (8) so as to be swivellable about a swivel axis (20).

6. A strapping machine (1) according to claims 4 and 5, **characterised in that** the curved surface portion (18) is arranged on the swivel lever (19) at a distance from the swivel axis (20).

7. A strapping machine (1) according to claims 5 and 6, **characterised in that** the swivel lever (19) is connected rigidly with an actuating lever (22), the end of which acts on a pushbutton (23) of the electrical switch (24).

8. A strapping machine (1) according to any one of the preceding claims, **characterised in that** the deflection means (19) is arranged between the strap supply (3) and the strapping zone (9).

9. A strapping machine (1) according to any one of the preceding claims, **characterised in that** it comprises a tensioning drive for tensioning a loop (16) surrounding the package (10) and a fastening means (13, 15) for connecting the overlapping ends of this loop (16).

10. A strapping machine (1) according to claim 9, **characterised in that** the deflection means (19) is arranged between the tensioning drive and the strapping zone (9) and **in that** the deflection means (19) is coupled to the signalling means (24) and the tensioning drive is switched off on a signal from the signalling means (24).

11. A strapping machine (1) according to claim 10, **characterised in that** it comprises a detection means which detects whether the tensioning drive is activated and transmits a corresponding status signal to a control unit, wherein, when the tensioning drive is activated, the tensioning drive is switched off on a signal from the signalling means (24) and, when the tensioning drive is deactivated, strap transportation is initiated on a signal from the signalling means (24).

12. A strapping machine (1) according to claim 10 or claim 11, **characterised in that** the fastening means (13, 15) is actuated by the control device after the tensioning drive has been switched off.

13. A strapping machine (1) according to claim 12, **characterised in that** it comprises a severing device (14, 15) which is actuated by the control device substantially synchronously with the fastening means (13, 15).

14. A method for manual strapping of packages (10) with a strap (4), **characterised in that** a signal is generated by a tensile force acting on the strap (4), which signal is forwarded to a drive control for a drive means (6, 7), wherein the drive control activates the drive means (6, 7) on occurrence of the signal, in order to effect strap transportation into a strapping zone (9).

15. A method according to claim 14, **characterised in that** the drive means is activated to output a predetermined length of strap (4).

16. A method according to claim 14 or claim 15, **characterised in that** a detection means detects whether the drive means is activated and, in the case of an active drive means (6, 7), the drive control deactivates the drive means (6, 7) on occurrence of the signal.

17. A method according to any one of claims 14 to 16, **characterised in that** the strap (4) is tensioned by a tensioning drive and **in that**, on occurrence of a signal from the signalling means (24), the tensioning drive is switched off.

18. A method according to any one of claims 14 to 16, **characterised in that** a detection means detects whether the tensioning drive is activated and **in that**, when the tensioning drive is activated, the tensioning drive is switched off on occurrence of a signal from the signalling means (24) and, when the tensioning drive is deactivated, strap transportation is initiated on occurrence of a signal from the signalling means (24).

## Revendications

1. Machine de cerclage (1) pour le cerclage de paquets (10) avec une bande de cerclage (4), comprenant un moyen d'entraînement (6, 7) pour transporter la bande de cerclage (4) d'une réserve de bande (3) vers une zone de cerclage (9), **caractérisée en ce que** le moyen d'entraînement (6, 7) est couplé à un émetteur de signaux (24) qui émet un signal lorsqu'un effort de traction est exercé sur la bande de cerclage (4) et **en ce que** le moyen d'entraînement (6, 7), à réception d'un signal de l'émetteur de signaux (24), provoque le transport de la bande dans la zone de cerclage (9).

2. Machine de cerclage (1) selon la revendication 1, **caractérisée par** un moyen déflecteur mobile (19) qui guide la bande de cerclage (4) le long d'une trajectoire incurvée et qui peut passer d'une position de repos à une position d'émission de signal sous l'effet d'un effort de traction exercé sur la bande de cerclage (4), ledit moyen déflecteur (19) étant couplé à l'émetteur de signaux (24) de façon à produire un signal lorsqu'il se trouve dans la position d'émission de signal.

3. Machine de cerclage (1) selon la revendication 1 ou 2, **caractérisée en ce que** l'émetteur de signaux est un interrupteur électrique (24).

4. Machine de cerclage (1) selon l'une des revendications précédentes, **caractérisée en ce que** le moyen déflecteur (19) présente une portion de surface en arc de cercle (18) le long de laquelle la bande de cerclage (4) est guidée.

5. Machine de cerclage (1) selon l'une des revendications précédentes, **caractérisée en ce que** le moyen déflecteur est un levier pivotant (19) qui est fixé à l'élément support (8) avec capacité de pivotement autour d'un pivot (20).

6. Machine de cerclage (1) selon les revendications 4 et 5, **caractérisée en ce que** la portion de surface en arc de cercle (18) est située sur le levier pivotant (19) à distance du pivot (20).

7. Machine de cerclage (1) selon les revendications 5 et 6, **caractérisée en ce que** le levier pivotant (19) est relié de manière rigide à un levier d'actionnement (22) dont l'extrémité agit sur un bouton-poussoir (23) de l'interrupteur électrique (24).

8. Machine de cerclage (1) selon l'une des revendications précédentes, **caractérisée en ce que** le moyen déflecteur (19) est agencé entre la réserve de bande (3) et la zone de cerclage (9).

9. Machine de cerclage (1) selon l'une des revendications précédentes, **caractérisée en ce qu'**elle comprend un mécanisme tendeur pour tendre la boucle (16) entourant le paquet (10) et un moyen de fermeture (13, 15) pour relier les extrémités de la boucle (16) qui se chevauchent.

10. Machine de cerclage (1) selon la revendication 9, **caractérisée en ce que** le moyen déflecteur (19) est agencé entre le mécanisme tendeur et la zone de cerclage (9), **en ce que** le moyen déflecteur (19) est couplé à l'émetteur de signaux (24) et **en ce que** le mécanisme tendeur est mis hors circuit à réception d'un signal de l'émetteur de signaux (24).

11. Machine de cerclage (1) selon la revendication 10, **caractérisée en ce qu'**elle comprend un moyen de détection qui détecte si le mécanisme tendeur est activé et transmet un signal d'état correspondant à une unité de commande, étant précisé que lorsque le mécanisme tendeur est activé, le mécanisme tendeur est mis hors circuit à réception d'un signal de l'émetteur de signaux (24), et que lorsque le mécanisme tendeur est désactivé, un transport de bande est déclenché à réception d'un signal de l'émetteur de signaux (24).

12. Machine de cerclage (1) selon l'une des revendications 10 ou 11, **caractérisée en ce que** le moyen de fermeture (13, 15) est actionné par le dispositif de commande après mise hors circuit du mécanisme tendeur.

13. Machine de cerclage (1) selon la revendication 12, **caractérisée en ce qu'**elle comprend un dispositif de coupe (14, 15) qui est actionné par le dispositif de commande d'une manière sensiblement synchrone avec le moyen de fermeture (13, 15).

14. Procédé pour le cerclage manuel de paquets (10) avec une bande de cerclage (4), **caractérisé en ce qu'**un signal est émis suite à l'exercice d'un effort de traction sur la bande de cerclage (4), ledit signal étant transmis à une commande d'entraînement d'un moyen d'entraînement (6, 7), la commande d'entraînement activant le moyen d'entraînement (6, 7) à réception du signal afin de déclencher le transport de la bande dans une zone de cerclage (9).

15. Procédé selon la revendication 14, **caractérisé en ce que** le moyen d'entraînement est activé pour délivrer une longueur prédéterminée de bande de cerclage (4).

16. Procédé selon la revendication 14 ou 15, **caractérisé en ce qu'**il est détecté, à l'aide d'un moyen de détection, si le moyen d'entraînement est activé, et **en ce que** lorsque le moyen d'entraînement (6, 7) est activé, la commande d'entraînement désactive le moyen d'entraînement (6, 7) à réception du signal.

17. Procédé selon l'une des revendications 14 à 16, **caractérisé en ce que** la bande de cerclage (4) est tendue par un mécanisme tendeur et **en ce que** le mécanisme tendeur est mis hors circuit à réception d'un signal de l'émetteur de signaux (24).

18. Procédé selon l'une des revendications 14 à 16, **caractérisé en ce qu'**il est détecté, à l'aide d'un moyen de détection, si le mécanisme tendeur est activé et **en ce que** lorsque le mécanisme tendeur est activé, ledit mécanisme tendeur est mis hors circuit à réception d'un signal de l'émetteur de signaux (24) et **en ce que** lorsque le mécanisme tendeur est désactivé, le transport de la bande est déclenché à réception d'un signal de l'émetteur de signaux (24).
